# EUROPÄISCHE PATENTANMELDUNG

(11) **EP 0 992 561 A1**
(43) Veröffentlichungstag der Anmeldung: **12.04.2000**
(21) Anmeldenummer: 99810838.5
(22) Anmeldetag: 21.09.1999
(51) Int. Cl.: C09K 3/14, B24D 3/06, C22C 26/00

(54) **Abrasive Schneidkörper enthaltend Diamantpartikel und Verfahren zur Herstellung der Schneidkörper**

(30) Priorität: 28.09.1998 DE 19844397
(71) Anmelder: HILTI Aktiengesellschaft, 9494 Schaan (LI)
(72) Erfinder: Ritt, Walter, 6822 Schnifis (AT); Tillmann, Wolfgang, 6714 Nüziders (AT); Dorfmeister, Johann, 6800 Feldkirch (AT); Goedickemeier, Martin, 9056 Gais (CH)
(74) Vertreter: Wildi, Roland

(57) **Zusammenfassung**

Ein abrasiver Schneidkörper, der wenigstens eine Diamantpartikel, vorzugsweise wenigstens einen Diamanteinkristall, und metallisches Bindermaterial (B) umfasst, zeichnet sich dadurch aus, dass die Diamantpartikel (D) eine Korngrösse aufweist, die etwa 50 µm bis etwa 500 µm beträgt und jede Diamantpartikel (D) von einer in einem Wirbelbettprozess hergestellten Umhüllung (H) mit einer Wandstärke von etwa 10 µm bis etwa 200 µm umgeben ist. Das Volumen der Umhüllung (H) beträgt dabei mindestens 30% des Volumens der Diamantpartikel (D) im vollverdichteten Zustand, nach vereinzelter Sinterung der umhüllten Diamantpartikel (D,H). Die abrasiven Schneidkörper sind unmittelbar auf ein abrasives Werkzeug aufbringbar. Sie sind auch zu porösen Verbundschneidkörpern oder zu Schneidsegmenten weiterverarbeitbar. Bei dem erfindungsgemässen Verfahren werden die Diamantpartikel (D) in einen Wirbelbettreaktor eingebracht und mit einer metallischen Umhüllung (H) versehen. Die umhüllten Diamantpartikel (D,H) werden zu grössernen Schneidkörpern weiterverarbeitet oder jeweils einzeln gesintert und unmittelbar auf ein abrasives Werkzeug aufgebracht.

## Beschreibung

Die Erfindung betriffl Schneidkörper enthaltend Diamantpartikel zur abrasiven Bearbeitung von harten Untergründen gemäss dem Oberbegriff des Patentanspruchs 1. Weiters betriffl die Erfindung auch ein Verfahren zur Herstellung derartiger Schneidkörper gemäss dem Oberbegriff des Patentanspruchs 12.

In vielen Anwendungen der Abbautechnik kommen Werkzeuge zum Einsatz, die zur Verbesserung ihrer abrasiven Eigenschaften mit Schneidkörpern bestückt sind, die Diamantpartikel enthalten. Zur Erstellung von Bohrungen oder Durchbrüchen grösserer Durchmesser werden beispielsweise Hohlbohrkronen verwendet, die an ihrem vorderen Ende mit Schneidsegmenten ausgestattet sind. Auch Wandsägen und Trennscheiben für das Schneiden von Beton, Stein oder Keramik sind an ihrem Umfang mit Schneidsegmenten bestückt. Weiters sind auch Schleifscheiben zur Oberflächenbearbeitung bekannt, die an ihrer Flachseite mit Diamantpartikel enthaltenden Schneidkörpern besetzt sind. Die abrasiven Schneidkörper bestehen im wesentlichen aus Diamantpartikeln, vorzugsweise Diamanteinkristallen, die in eine metallische Matrix eingebettet sind und eine mehr oder weniger regelmässige Gestalt aufweisen. Die Schneidsegmente, mit denen Hohlbohrkronen bzw. Wandsägeblätter und Trennscheiben bestückt sind, weisen ein grösseres Volumen auf und sind von regelmässiger Gestalt.

Zur Herstellung der abrasiven Schneidkörper bzw. der grösseren Schneidsegmente werden die Diamantpartikel mit dem Metallpulver und gegebenenfalls weiteren Bestandteilen, beispielsweise Hartstoffleilchen, gemischt. Das Gemisch aus Diamantpartikeln, Metallpulver und ggf. weiteren Bestandteilen wird entweder unmittelbar gesintert und zu einer kuchenartigen Masse zusammengebacken, die in einem nachfolgenden Schritt wieder in kleine Teile gebrochen wird. Nach dem Sieben der gebrochenen Teile werden die verwertbaren Siebfraktionen mit den geeigneten Korngrössen beispielsweise für die Beschichtung von Schleifscheiben und dergleichen verwendet. Für die Herstellung von Schneidsegmenten, wie sie beispielsweise für Hohlbohrkronen, Wandsägen oder Trennscheiben verwendet werden, wird das Gemisch aus Diamantpartikeln, Metallpulver und gegebenenfalls weiteren Bestandteilen zunächst in die gewünschte Form gepresst. Der resultierende Grünling wird schliesslich gesintert, um das zusammengepresste Gemisch permanent miteinander zu verbinden.

Bei diesen bekannten Verfahren kommt es, insbesondere bei höheren Konzentrationen der Diamantpartikel, vor, dass die Diamantpartikel innerhalb des als Binder wirkenden Metallpulvers unmittelbar aneinanderliegen. Derartige Diamant-Diamant Kontakte weisen nur eine schwache Bindung auf und können zu Schwachstellen innerhalb des abrasiven Schneidkörpers führen. Eine gewisse Verbesserung der Situation tritt ein, wenn die Diamantpartikel vor dem Vermischen mit dem Metallpulver mit einer Metallschicht umhüllt werden. Mit den bekannten Umhüllungstechniken können jedoch nur relativ dünne Schichten an der Oberfläche der Diamantpartikel abgeschieden werden. Meist erfolgt die Abscheidung galvanisch, wobei die erzielbaren Schichtdicken bis etwa 5 µm betragen können. CVD- (chemical vapour deposition) oder PVD- (physical vapour deposition) Techniken sind relativ aufwendig und teuer. Sie werden manchmal eingesetzt, um Diamantpartikel grosser Korngrössen besser in eine Polymermatrix einzubinden. Für die Verbesserung der Einbindung in eine metallische Matrix sind sie im allgemeinen nicht geeignet. Die mit diesen Umhüllungtechniken erzielbaren Schichtdicken liegen auch meist unter denen galvanischer Methoden.

Aufgabe der vorliegenden Erfindung ist es, einen abrasiven Schneidkörper und ein Verfahren zu dessen Herstellung zu schaffen, welches die Nachteile der Schneidkörper und der Verfahren des Stands der Technik behebt. Schwachstellen infolge von Diamant-Diamant Kontakten sollen zuverlässig vermieden werden können. Das Verfahren soll kostengünstig durchführbar sein und Umhüllungen in grösseren Schichtdicken erlauben. Durch die Erfindung sollen auch die Voraussetzungen für die Herstellung von Schneidkörpern mit variablen Eigenschaften geschaffen werden.

Die Lösung dieser Aufgaben besteht in einem abrasiven Schneidkörper mit den im kennzeichnenden Abschnitt des Patentanspruchs 1 angeführten Merkmalen sowie in einem Verfahren zu dessen Herstellung, welches die im kennzeichnenden Abschnitt des Patentanspruchs 12 aufgelisteten Verfahrensschritte umfasst. Der erfindungsgemässe abrasive Schneidkörper, der wenigstens eine Diamantpartikel, vorzugsweise wenigstens einen Diamanteinkristall, und metallisches Bindermaterial umfasst, zeichnet sich dadurch aus, dass die Diamantpartikel eine Korngrösse aufweist, die etwa 50 µm bis etwa 500 µm beträgt und jede Diamantpartikel von einer in einem Wirbelbettprozess hergestellten Umhüllung mit einer Wandstärke von etwa 10 µm bis etwa 200 µm umgeben ist. Das Volumen der Umhüllung beträgt dabei mindestens 30% des Volumens der Diamantpartikel im vollverdichteten Zustand, nach vereinzelter Sinterung der umhüllten Diamantpartikel.

Indem jede Diamantpartikel mit einer verhältnismässig dicken Umhüllung versehen ist, werden bei Verbundschneidkörpern Diamant-Diamant Kontakte, die zu Schwachstellen des Schneidkörpers führen können, zuverlässig vermieden. Die Beschichtung im Wirbelbettprozess ist relativ einfach und kostengünstig durchführbar. Im Wirbelbett sind die Diamantpartikel in Schwebe gehalten, und sie werden dabei ständig durcheinandergewirbelt. Dadurch ist sichergestellt, dass jede Diamantpartikel im gewünschten Umfang mit der metallischen Umhüllung versehen wird. Die chemische und/oder mechanische Einbindung der Diamantpartikel in die metallische Matrix ist verbessert, da die durch den Wirbelbettprozess aufgebrachte Umhüllung dichter ist als die Beschichtungen, die mit galvanischen Methoden oder mit CVD- oder PVD-Techniken aufbringbar sind. Durch den gewählten Wirbelbettprozess kann die Art der Beschichtung variiert werden, beispielsweise um die Eigenschaften des abrasiven Schneidkörpers in gewünschtem Umfang verändern und einstellen zu können. Die umhüllten Diamantpartikel sind vereinzelt gesintert. Dadurch backen sie nicht zusammen. Das Brechen eines Sinterkuchens entfällt. Die einzeln gesinterten abrasiven Schneidkörper sind unmittelbar weiterverarbeitbar. Beispielsweise können sie unmittelbar auf die Oberfläche einer Schleifscheibe aufgebracht werden. Infolge der relativ dicken metallischen Umhüllung, deren Volumen wenigstens 30% des Volumens der Diamantpartikel nach dem Sintervorgang ausmacht, können sie dabei direkt auf die Oberfläche aufgelötet werden. Die Verwendung eines Aktivlots oder dergleichen kann entfallen.

Die erfindungsgemässe Umhüllung des abrasiven Schneidkörpers erlaubt es, die Umhüllung der Diamantpartikel mit radial unterschiedlichen Materialzusammensetzungen auszubilden. Auf diese Weise können die chemischen und die physikalischen Eigenschaften der Umhüllung gezielt gesteuert werden, beispielsweise um unterschiedlichen Anforderungen an die Schneidkörper Rechnung zu tragen. Die Bereiche unterschiedlicher Materialzusammensetzung der Umhüllung sind dabei durch unterschiedliche Konzentrationen von Legierungsbestandteilen und/oder Hartstoffanteilen gebildet.

In einer Variante der Erfindung besitzt die Umhüllung einen schichtartigen Aufbau. Der schichtartige Aufbau setzt sich aus einer innersten harten, chemischen Einbindungsschicht für die Diamantpartikel und wenigsten einer weiteren, nach aussen anschliessenden Schicht zusammen. Die innerste Schicht umfasst vorzugsweise eine Legierung aus Nickel, Eisen und/oder Kobalt mit 0,5- 15 Gew.% Chrom, 1 - 3 Gew.% Bor, 1 - 5 Gew.% Silizium oder eine Legierung aus Kupfer-Titanat mit einem Titan-Anteil von 4 - 10 Gew.%. Die wenigstens eine, anschliessende Schicht umfasst 10 - 30 Gew.% Hartstoffanteil, vorzugsweise Wolframcarbid, Titancarbid, Siliziumcarbid, Siliziumnitrid, Zirkonoxid, Aluminumoxid, Titanborid, Tantalcarbid, Oxide seltener Erden oder Mischungen derselben. Die Mengenangaben in Gewichtsprozent beziehen sich dabei auf den Metallanteil der gesinterten umhüllten Diamantpartikel.

In einer alternativen Variante der abrasiven Schneidkörper gehen die Bereiche unterschiedlicher Konzentrationen von Legierungsbestandteilen und/oder Hartstoffanteilen nicht sprunghaft, wie bei einem Schichtaufbau, sondern im wesentlichen stetig ineinander über. Auf diese Weise ausgebildete abrasive Schneidkörper weisen in der Umhüllung beispielsweise eine Konzentration der Legierungsbestandteile und/oder der Hartstoffanteile auf, die von der Oberfläche der Diamantpartikel zur Aussenfläche des Schneidkörpers einen Gradienten besitzt. Dabei weisen vorzugsweise die äusseren Bereiche der Umhüllung die höchsten Konzentrationen an Hartstoffleilchen auf. Auf diese Weise wird die Abrasionsbeständigkeit der Schneidkörper verbessert.

Es kann vorgesehen sein, dass ein zwischen dem an die Diamantpartikel angrenzenden Bereich und den radial am weitesten davon beabstandeten Bereichen angeordneter Abschnitt der Umhüllung eine Konzentrationssenke an Legierungsbestandteilen und/oder Hartstoffanteilen aufweist. Dadurch ist beispielsweise die Elastizität des Schneidkörpers verbesserbar oder die Wärmeleitfähigkeit des Schneidkörpers kann beeinflusst werden.

Als Legierungsbestandteile, deren Konzentration in der metallischen Umhüllung variabel einstellbar ist, eignen sich beispielsweise Chrom, Bor, Titan, Silizium oder keramische Zuschlagstoffe mit niedriger Wärmeleitfähigkeit, wie beispielsweise Oxide seltener Erden. Durch die Veränderung der Konzentration der Legierungsbestandteile sind die chemischen und physikalischen Eigenschaften der Umhüllung gezielt beeinflussbar. Beispielsweise kann auf diese Weise die Einbettung der Diamantpartikel in die umhüllende Metallmatrix verbessert werden. Die Zugabe von keramischen Zuschlagstoffen mit niedriger Wärmeleitfähigkeit verhindert bei ungenügender Kühlung ein lokales Überhitzen der Schneidkörper. Als Hartstoffe zur Verbesserung der Abrasivität und der Abrasionsbeständigkeit der Schneidkörper kommen vorzugsweise Wolframcarbid, Titancarbid, Siliziumcarbid, Siliziumnitrid, Zirkonoxid, Aluminumoxid, Titanborid, Tantalcarbid, oder Mischungen derselben zur Anwendung. Bei Verbundschneidkörpern ist auf diese Weise auch der Überstand der beschichteten Diamantpartikel gegenüber der Oberfläche des Verbundschneidkörpers verbesserbar.

Im Fall von Hartstoffleilchen erweisen sich Konzentrationsunterschiede in den verschiedenen Bereichen bis etwa 30 Gew.% als zweckmässig. Der Konzentrationsunterschied der Legierungsbestandteile in den verschiedenen Bereichen beträgt bis zu etwa 10 Gew.%. Die Angaben beziehen sich jeweils auf das Gesamtgewicht einer einzelnen gesinterten umhüllten Diamantpartikel.

Anstatt die abrasiven Schneidkörper unmittelbar auf die Oberfläche beispielsweise einer Schleifscheibe aufzubringen, sind sie auch zu porösen Verbundschneidkörpern verbindbar. Die porösen Verbundschneidkörper umfassen eine grössere Anzahl von abrasiven Schneidkörpern, die durch eine Aufbaugranulation und anschliessendes Sintern miteinander verbunden sind. Die mittlere Korngrösse der porösen Verbundschneidkörper beträgt etwa 400 µm bis etwa 1400 µm.

Die abrasiven Schneidkörper können auch zu Schneidsegmenten für Hohlbohrkronen, Wandsägeblätter oder Trennscheiben weiterverarbeitet sein. Die Schneidsegmente umfassen eine grössere Anzahl der erfindungsgemässen abrasiven Schneidkörper, die, gegebenenfalls unter Zugabe von weiterem metallischem Binder, in die gewünschte Form gebracht und durch Sintern oder Heisspressen miteinander verbunden sind.

Bei dem erfindungsgemässen Verfahren zur Herstellung von abrasiven Schneidkörpern, die wenigstens eine Diamantpartikel und metallisches Bindermaterial umfassen, werden Diamantpartikel einer Korngrösse von etwa 50 µm bis etwa 500 µm in einen Wirbelbettreaktor eingebracht. Im Wirbelbettreaktor werden die Diamantpartikel in Schwebe gehalten und laufend verwirbelt. Die in Schwebe gehaltenen Diamantpartikel werden mit einer metallischen Umhüllung versehen, deren Wandstärke etwa 10 µm bis etwa 200 µm beträgt. Danach werden die beschichteten Diamantpartikel zu grösseren Schneidkörpern weiterverarbeitet oder einzeln gesintert, um die metallische Umhüllung fest mit der Diamantpartikel zu verbinden. Beim Sintervorgang schrumpft das Volumen der Umhüllung, und die umhüllte Diamantpartikel wird verdichtet. Nach der Sinterung weist die Umhüllung ein Volumen auf, das mindestens 30% des Volumens der Diamantpartikel im vollverdichteten Zustand beträgt.

Die Umhüllung der Diamantpartikel im Wirbelbettreaktor erlaubt die Abscheidung der metallischen Umhüllung in der gewünschten Dicke. Die derart abgeschiedene Umhüllung weist eine grössere Dichte auf, als die galvanisch oder durch CVD- oder PVD-Techniken abgeschiedenen Schichten. Dadurch ist die Diamantpartikel besser in die Umhüllung eingebunden. Die Beschichtung im Wirbelbettreaktor ist relativ einfach zu steuern und erlaubt es auch, durch geeignete Wahl der Parameter die Eigenschaften der Umhüllung gezielt zu beeinflussen.

Mit Vorteil wird die metallische Umhüllung aus einer Suspension abgeschieden, die durch eine Düse auf die im Wirbelbettreaktor durch ein vorgewärmtes Fluidisiergas, vorzugsweise Luft, in Schwebe gehaltenen und verwirbelten Diamantpartikel gesprüht wird. Die Suspension umfasst ein Lösungsmittel, vorzugsweise Wasser, und das aufzubringende, pulverförmige Metall. Ein in der Suspension enthaltener organischer Binder und Additive zur Einstellung der Rheologie machen weniger als 10 Gew.% des Metallpulvers aus. Der organische Binder ist vorzugsweise Polyethylenglykol. Der Suspension können im gewünschten Umfang auch Zusatzstoffe, wie beispielsweise Hartstoffe oder keramische Zuschlagsstoffe beigemengt werden.

Für die Qualität der abgeschiedenen Umhüllung erweist es sich von Vorteil, wenn das pulverförmige Metall in der Suspension eine mittlere Korngrösse aufweist, die etwa 0,5 µm bis etwa 100 µm beträgt, wobei die maximale Korngrösse vorzugsweise die Hälfte der Korngrösse der Diamantpartikel beträgt.

Das den Hauptbestandteil der auf die Diamantpartikel aufgebrachten Umhüllung ausmachende Metallpulver besteht vorzugsweise aus einer Legierung auf Nickel-, Eisen- und/oder Kobaltbasis unter Zugabe von Silizium und/oder Bor und grenzflächenaktiven Elementen, wie beispielsweise Chrom, mit 0,5- 15 Gew.% Chrom, 1 - 3 Gew.% Bor, 1 - 5 Gew.% Silizium, oder aus einer Kupfer-Titanat Legierung mit einem Titan-Anteil von 4 - 10 Gew.%. Die Mengenangaben in Gewichtsprozent beziehen sich dabei auf den Metallanteil der gesinterten, umhüllten Diamantpartikel.

Besonders einfach sind die chemischen und/oder physikalischen Eigenschaften der Umhüllung einstellbar, indem die Zusammensetzung der in den Wirbelbettreaktor eingesprühten Suspension während des Umhüllungvorgangs verändert wird.

Die chemischen Eigenschaften der Umhüllung sind insbesondere durch Veränderung der Konzentration von Legierungsbestandteilen in der Suspension veränderbar. Dabei erweist sich eine Variation der Legierungsbestandteile im Ausmass von bis zu 10 Gew.% als zweckmässig. Durch gezielte Zugabe und Veränderung der Konzentration von keramischen Zuschlagsstoffen und/oder Hartstoffteilchen der in den Wirbelbettreaktor eingesprühten Suspension sind die physikalischen Eigenschaften der Umhüllung, beispielsweise die Abrasivität, die Abrasions- und Temperaturbeständigkeit, kontrollierbar. Der Umfang, in dem beispielsweise die Hartstoffteilchenkonzentration variiert wird, beträgt vorzugsweise bis etwa 30 Gew.%. Die Mengenangaben in Gewichtsprozent beziehen sich dabei auf das Gesamtgewicht der gesinterten umhüllten Diamantpartikel.

Die einzeln zu abrasiven Schneidkörpern gesinterten umhüllten Diamantpartikel können unmittelbar auf ein abrasives Werkzeug, beispielsweise auf eine Schleifscheibe, aufgebracht, insbesondere aufgelötet, werden. Infolge der erfindungsgemässen Umhüllung kann beim Auflöten auf ein Aktivlot verzichtet werden. Die abrasiven Schneidkörper sind auch zu grösseren Verbundschneidköpern weiterverarbeitbar. Dazu werden die beschichteten Diamantpartikel einer Aufbaugranulation unterzogen, wobei Granulate erzeugt werden, die durch Sintern zu einem Verbundschneidkörper mit einer Korngrösse von etwa 400 µm bis etwa 1400 µm verarbeitet werden. Die Verbundschneidkörper können eine poröse Konsistenz aufweisen oder einen kompakten Aufbau mit etwa 90% bis etwa 99% der theoretisch erreichbaren Dichte besitzen.

Als Verfahren zur Aufbaugranulation erweisen sich Maskengranulation, Siebgranulation oder die Anlagerung von mehreren Schneidkörpern in einem Wirbelbettprozess als zweckmässig. Bei der Maskengranulation werden die umhüllten Diamantpartikel unter weiterer Zugabe von Bindermaterial mittels eines pastösen Trägers, beispielsweise Wachs, und Alkoholen mit rheologischen Komponenten, die eine Entmischung verhindern, in die Kavitäten einer Maske eingebracht. Die Maske kann ein starres Gebilde aus Keramik oder Metall sein. Sie kann auch von einem dehnbaren Formkörper aus einem Kunststoff, beispielsweise Silikonkautschuk, gebildet sein. Nach einem Trocknungsschritt, bei dem bei moderaten Temperaturen von etwa 50°C bis etwa 70°C der organische Anteil des Binders ausgetrieben wird, erfolgt ein Vakuumsintervorgang, bei dem mindestens die Solidustemperatur des vorwiegend metallischen Binders erreicht wird. Die dabei verwendeten Sintertemperaturen liegen typischerweise bei etwa 900°C bis etwa 1300°C. Erfolgt der Trocknungsschritt in einer keramischen oder metallischen Maske, kann das vorgetrocknete Gemisch für den Vakuumsintervorgang in der Maske verbleiben. Bei geeigneter Wahl des Materials, beispielsweise für eine metallische Maske, muss der gesinterte Verbundschneidkörper anschliessend nicht einmal entformt werden. Die Maske kann als Bestandteil des Verbundschneidkörpers verbleiben. Abgesehen von dem Vorteil, dass der Entformungsschritt entfällt, stellt die metallische Maske ein zusätzliches, strukturgebendes Merkmal des Verbundschneidkörpers dar.

Erfolgt die Mischung und Trocknung in einer flexiblen Kunststoffmaske, wird das vorgetrocknete Gemisch vor dem Vakuumsintervorgang aus der Form entnommen. Aufgrund der hohen Dehnbarkeit der Kunststofform ist eine einfache Entformung gewährleistet. Die Stabilität des vorgetrockneten Gemisches ist ausreichend hoch, um eine sichere weitere Handhabung zu gewährleisten. Für den Sinterprozess wird das Gemisch auf einen Keramikteller, beispielsweise aus Aluminiumoxid, oder auf ein Korundbett aufgebracht. Nach der erfolgten Vakuumsinterung können die Verbundschneidkörper durch Siebung von den Korundkörnern getrennt werden.

Bei der Siebgranulation werden die umhüllten Diamantpartikel mittels zusätzlicher organischer Binder und durch ein Lösungsmittel in eine pastöse Form gebracht und anschliessend durch ein Sieb passiert. Die Maschenweite des Siebes ist derart gewählt, dass die Verbundschneidkörper nach dem Sintern die gewünschte Korngrösse von etwa 400 µm bis etwa 1400 µm aufweisen.

Die dritte vorteilhafte Methode der Aufbaugranulation erfolgt in einem Wirbelbettprozess. Dabei werden die metallisch umhüllten Diamantpartikel in einen Wirbelbettreaktor eingebracht und durch ein Fluidisiergas in Schwebe gehalten. Eine in den Wirbelbettreaktor eingesprühte Suspension dient dazu, die beschichteten Diamantpartikel zusammenzukleben. Die Suspension kann im wesentlichen der zur Umhüllung der Diamantpartikel verwendeten Suspension entsprechen und besteht aus einem Lösungsmittel, vorzugsweise Wasser, einem als Binder dienenden Metallpulver, einem organischen Bindemittel, beispielsweise Polyethylenglykol, zusätzlichen organischen Additiven, beispielsweise zur Einstellung der Rheologie, und allenfalls zusätzlichen pulverförmigen Hartstoffen. Die Suspension kann sich auch von der zur Umhüllung der Diamantpartikel verwendeten Suspension unterscheiden. Die agglomerierten Granulate werden anschliessend bei einer Temperatur von etwa 900°C bis etwa 1250°C, vorzugsweise bei etwa 950°C bis etwa 1080°C gesintert. Der Sintervorgang erfolgt derart, dass die porösen Verbundschneidkörper nach dem Sintern vereinzelt vorliegen und kein mechanischer oder chemischer Prozess angewendet werden muss, um sie voneinander zu trennen. Beispielsweise erfolgt die Sinterung auf einem Korundbett. Nach dem Sintervorgang können die Verbundschneidkörper durch Siebung von den Korundkörnern getrennt werden. Die Korngrösse der derart hergestellten Verbundschneidkörper beträgt etwa 400 µm bis etwa 1400 µm. Die Verbundschneidkörper können eine poröse Konsistenz aufweisen oder einen kompakten Aufbau mit etwa 90% bis etwa 99% der theoretisch erreichbaren Dichte besitzen.

Zur Herstellung von Schneidsegmenten für den Einsatz in Verbindung mit Wandsägeblättern, Hohlbohrkronen und Trennscheiben oder zur Fertigung von Bohrköpfen oder Schneidplättchen für Bohrwerkzeuge werden die umhüllten Diamantpartikel durch Pressen zu Presslingen geformt. Der Pressvorgang kann, beispielsweise bei Raumtemperatur, durch axiales oder isostatisches Pressen durchgeführt werden. Die Presslinge erhalten anschliessend durch Sintern bei Temperaturen von etwa 900°C bis etwa 1100°C ihre endgültige Form. Die Formgebung kann auch unmittelbar durch einen Heisspressvorgang erfolgen. Eine anschliessende Sinterung kann dabei entfallen.

Im folgenden wird die Erfindung unter Bezugnahme auf die schematischen Darstellungen näher erläutert. Es zeigen:
- Fig. 1 und 2: zwei Prinzipdarstellungen von Varianten der abrasiven Schneid körper;
- Fig. 3 bis 5: drei Varianten der erfindungsgemässen Schneidkörper mit einer schematischen Darstellung des Konzentrationsverlaufs von Legierungsbestandteilen, keramischen Zuschlagsstoffen oder Hartstoffanteil in der Umhüllung;
- Fig. 6: ein Ablaufschema eines Wirbelbettprozesses zur Umhüllung der Diamantpartikel;
- Fig. 7: ein Ablaufschema eines Wirbelbettprozesses zur Aufbauagglomeration; und
- Fig. 8: einen Verbundschneidkörper.

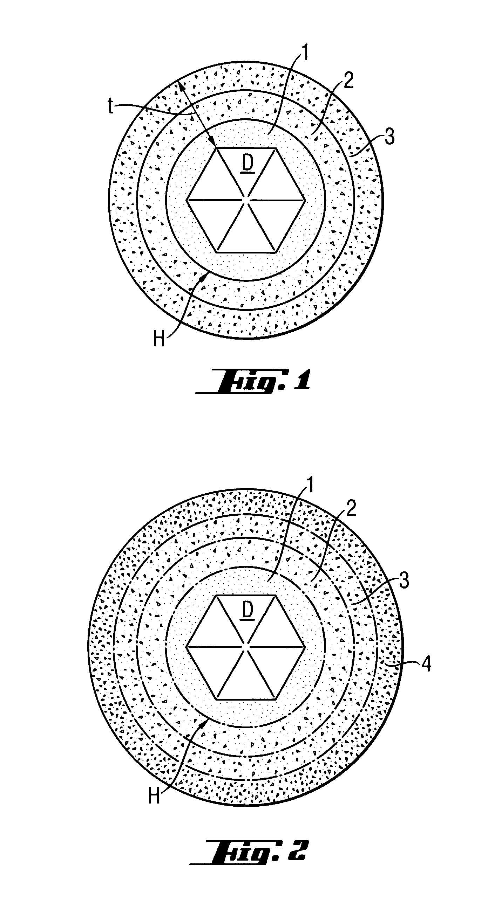

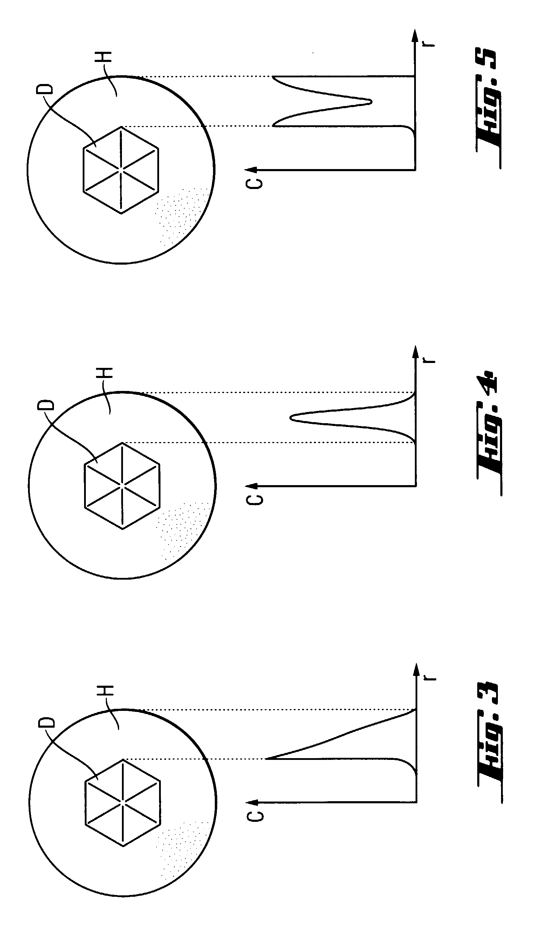

Fig. 1 und 2 zeigen zwei Varianten des erfindungsgemässen abrasiven Schneid körpers. Beide enthalten eine Diamantpartikel D, die von einer metallischen Umhüllung H umgeben ist. Die Diamantpartikel D weist eine Korngrösse von etwa 50 µm bis etwa 500 µm auf. Die Dicke t der Umhüllung H beträgt etwa 10 µm bis etwa 200 µm. Sie ist dabei derart gewählt, dass die Umhüllung H ein Volumen einnimmt, das mindestens 30% des Volumens der Diamantpartikel D im vollverdichteten Zustand ausmacht. Fig. 1 zeigt einen schichtweisen Aufbau der Umhüllung H mit unterschiedlichen Zusammensetzungen der Einzelschichten 1, 2 und 3. Beispielsweise bildet die Schicht 1 eine harte, chemische Einbindung für die Diamantpartikel. Die Schicht 2 kann aus demselben Material bestehen und ist beispielsweise mit zusätzlichen Hartstoffen versehen. Die äussere Schicht 3 weist beispielsweise eine geänderte Legierungszusammensetzung auf und ist beispielsweise weicher als die übrigen Schichten 1, 2. Die radiale Ausdehnung der einzelnen Schichten 1, 2, 3 ist beispielsweise etwa gleich gross, was bei der Herstellung der Umhüllung in einem Wirbelbettverfahren durch geeignete Wahl der Verfahrensparameter einstellbar ist. Die Zusammensetzung der einzelnen Schichten 1, 2, 3 ändert sich am Übergang von der einen Schicht zur nächsten sprunghaft.

Die Umhüllung H des in Fig. 2 dargestellten abrasiven Schneidkörpers weist mehrere, beispielsweise vier Bereiche 1, 2, 3, 4 mit unterschiedlichen Zusammensetzungen auf. Die Übergänge zwischen den einzelnene Bereichen erfolgen nicht sprunghaft sondern vielmehr kontinuierlich. Beispielsweise weist die Zusammensetzung der Umhüllung einen Gradienten der Konzentration an Hartstoffleilchen auf; von einem an die Diamantpartikel angrenzenden Bereich ohne Zugabe von Hartstoffen zu nach aussen hin immer höheren Hartstoffkonzentrationen.

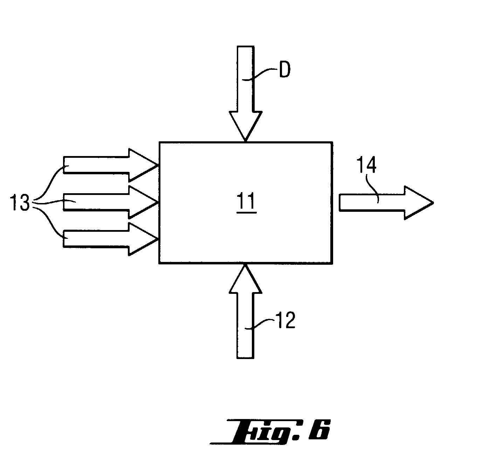

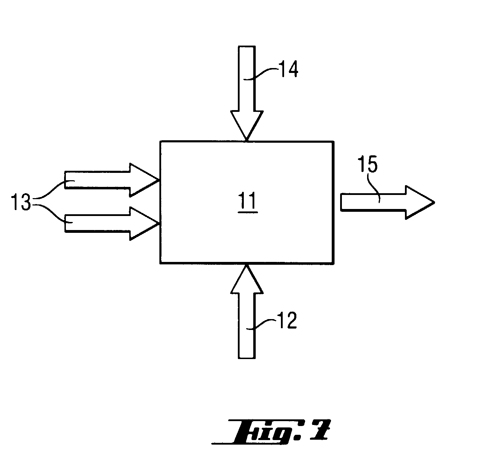

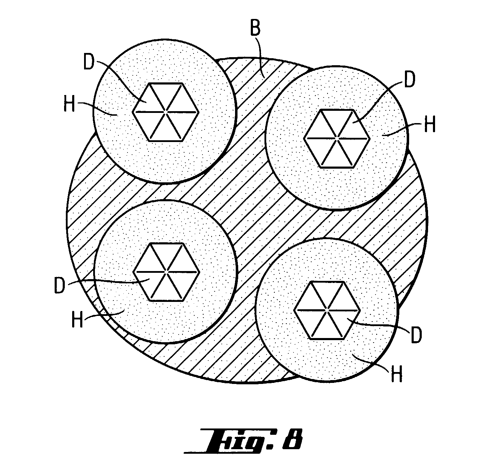

Fig. 3 - 5 zeigen verschiedene Beispiele für die radial unterschiedliche Zusammensetzung der Umhüllung H. In den Diagrammen bezeichnet r den Abstand vom Zentrum des Schneidkörpers. Auf der Achse mit der Bezeichung C ist jeweils die Konzentration beispielsweise eines Legierungsbestandteils der metallischen Umhüllung H der Diamantpartikel D angegeben. Fig. 3 ist ein Beispiel für eine Umhüllung mit einer von der Diamantpartikel D aus radial r nach aussen hin abnehmenden Konzentration C eines Legierungsbestandteils. Fig. 4 deutet eine Umhüllung H an, bei der etwa in der Mitte der radialen Erstreckung r der Umhüllung die Konzentration C eines Legierungsbestandteils am höchsten ist. Fig. 5 schliesslich zeigt eine Umhüllung H, bei der die Konzentration C eines Legierungsbestandteils der metallischen Umhüllung etwa in der Mitter ihrer radialen Erstreckung r ein Minimum aufweist.

In Fig. 6 ist das Ablaufschema des Beschichtungsvorgangs der Diamantpartikel wiedergegeben. Bei dem erfindungsgemässen Verfahren wird jede einzelne Diamantpartikel mit einer metallischen Umhüllung versehen. Dazu werden Diamanten D mit einer engen Korngrössenverteilung und einer Korngrösse aus dem Bereich von etwa 50 µm bis etwa 500 µm in einen Wirbelbettreaktor 11 eingebracht und dort durch ein vorgewärmtes Fluidisiergas 12, vorzugsweise Luft, bei einer Temperatur von etwa 20°C bis etwa 100°C in Schwebe gehalten. Die aufzubringende metallische Umhüllung liegt als Partikelsuspension 13 vor, die durch eine Düse auf die durcheinanderwirbelnden Diamantpartikel D gesprüht wird.

Die Partikelsuspension 13 besteht aus einem Lösungsmittel, vorzugsweise Wasser, dem aufzubringenden Metallpulver, einem organischen Binder, beispielsweise Polyethylenglykol, zusätzlichen, vorwiegend organischen Additiven, beispielsweise zur Einstellung der Rheologie und ggf. weiteren Zuschlagsstoffen, beispielsweise Hartstoffteilchen oder keramischen Zuschlagstoffen. Der Anteil des organischen Binders beträgt weniger als 10 Gew.% bezogen auf die Summe von Metallpulver plus allfälliger Zuschlagstoffe. Das Metallpulver in der Suspension hat vorzugsweise eine Korngrösse von etwa 0,5 µm bis etwa 100 µm. Die maximale Partikelgrösse der Partikelsuspension beträgt etwa die Hälfte des Durchmessers der Diamantpartikel. Das Metallpulver besteht aus einer Legierung auf Nickel-, Eisen- oder Cobaltbasis unter Zugabe von Silizium und/oder Bor und grenzflächenaktiven Elementen, wie beispielsweise Chrom. In einer alternativen Variante besteht das Metallpulver der Suspension aus einer Kupfertitanat-Legierung. Durch die Abfolge verschiedener Suspensionen bzw. durch die Veränderung der chemischen Zusammensetzung der Suspension oder durch die Zugabe von Zuschlagstoffen ist die gerade abgeschiedene Schicht beeinflussbar. Auf diese Weise sind gestufte oder kontinuierlich gradierte Umhüllungen herstellbar. Die Dicke der Umhüllung beträgt etwa 10 µm bis etwa 200 µm. Die derart mit einer Umhüllung versehenen Diamantpartikel 14 werden aus dem Wirbelbettreaktor abgezogen und können zu grösseren Verbundschneidkörpern, zu Diamantsegmenten, Bohrköpfen oder Schneidplättchen weiterverarbeitet oder einem Sinterungsschritt unterzogen werden, bei dem jede einzelne umhüllte Diamantpartikel 14 gesondert gesintert wird. Die gesinterten abrasiven Schneidkörper können unmittelbar auf ein Werzeug, beispielsweise eine Schleifscheibe aufgebracht, beispielsweise aufgelötet, werden.

Zur Weiterverarbeitung der umhüllten Diamantpartikel 14 zu porösen Verbundschneidkörpern werden diese beispielsweise einer Aufbaugranulation unterzogen, um grössere Verbundschneidkörper einer Korngrösse von etwa 400 µm bis etwa 1400 µm zu erzeugen. Als Verfahren zur Aufbaugranulation kommen Maskengranulation, Siebgranulation oder die Anlagerung von mehreren Schneidkörpern in einem Wirbelbettprozess zum Einsatz. Fig. 7 zeigt ein Ablaufschema einer Aufbaugranulation in einem Wirbelbettreaktor. Der Ablauf entspricht im wesentlichen dem anhand von Fig. 6 erläuterten. Das Wirbelbett 11 wird von den durch ein Fluidisiergas 12 in Schwebe gehaltenen umhüllten Diamantpartikeln 14 gebildet. Durch eine Düse wird eine Partikelsuspension 13 eingesprüht, die dazu dient, die beschichteten Diamantpartikel 14 zusammenzukleben. Die Suspension umfasst ein Lösungsmittel, vorzugsweise Wasser, einem Metallpulver, einen organischen Binder, beispielsweise Polyethylenglykol, zusätzliche organische Additive und allenfalls zusätzliche Zuschlagsstoffe, beispielsweise Hartstoffleilchen, keramische Zuschlagsstoffe usw. Sie kann in ihrer Zusammensetzung im wesentlichen der für die Umhüllung der Diamantpartikel eingesetzten Suspension entsprechen. Das agglomerierte Granulat 15 der gewünschten Korngrösse wird aus dem Wirbelbettreaktor abgezogen und bei einer Temperatur von 900°C bis etwa 1250°C, vorzugsweise 950°C bis 1080°C zu Verbundschneidkörpern gesintert. Die Verbundschneidkörper können eine poröse Konsistenz aufweisen oder einen kompakten Aufbau mit etwa 90% bis etwa 99% der theoretisch erreichbaren Dichte besitzen.

Fig. 8 zeigt schematisch ein Ausführungsbeispiel eines Verbundschneidkorns, das aus einer Anzahl von mit einer Umhüllung H versehenen Diamantpartikeln D besteht, die in einen Binder B eingebettet sind. Die umhüllten Diamantpartikel D ragen teilweise aus der Oberfläche des Verbundschneidkörpers. Im Einsatz ist der Verbundschneidkörper selbstschärfend, indem zunächst die aus der Oberfläche ragenden Diamantpartikel abgenützt werden und nach und nach, durch Abtrag des Bindermaterials B neue umhüllte Diamantpartikel D freigelegt werden.

Die für die Umhüllung bzw. für die Weiterverarbeitung der umhüllten Diamantpartikel eingesetzten Materialien beruhen auf einer Nickel-, Eisen- und/oder Cobaltbasis unter Zugabe von 0,5 -15 Gew.% Chrom, 1 - 3 Gew.% Bor, und 1 - 5 Gew.% Silizium. Eine alternative Metallegierung bildet Kupfer-Titanat basierend auf Kupfer mit einem Legierungsanteil von 4 Gew.% - 10 Gew.% von Titan. Die Mengenangaben sind auf das Gewicht des Metallanteils der gesinterten umhüllten Diamantpartikel bezogen.

Als Hartstoffe kommen beispielsweise Wolframcarbid in der Form WC und W₂C, Titancarbid, Siliziumcarbid, Siliziumnitrid in der Form Si₃N₄, stabilisiertes oder nicht stabilisiertes Zirkonoxid, Aluminiumoxid, Titanborid, Tantalcarbid, Oxide seltener Erden, beispielsweise CeO₂, Gd₂O₃, oder Mischungen derselben in Frage.

Organische Additive als Bestandteil der Partikelsuspensionen für den Wirbelbettprozess sind beispielsweise Wasser, Isopropanol, Ehanol, Methanol, Hexan, Benzol oder Toluol jeweils als Lösungsmittel und Polyethylenglykol, Starinsäure, Starate oder Thixotropiermittel als Binder bzw. rheologische Komponenten.

Die folgenden Angaben sind Beispiele für abrasive Schneidkörper mit einem diskreten Schichtaufbau der Umhüllung in Analogie zu dem anhand von Fig. 1 erläuterten Aufbau.

### Beispiel 1

Diamantpartikel in einer engen Korngrössenverteilung aus dem Korngrössenbereich von etwa 50 µm bis etwa 500 µm werden in einem Wirbelbettprozess aus einer eingesprühten Suspension mit einer metallischen Umhüllung aus NiCrBSi beschichtet. Die nur eine Schicht umfassende metallische Umhüllung basiert auf Nickel unter Zugabe von 0,5 -15 Gew.% Chrom, 1 - 3 Gew.% Bor, und 1 - 5 Gew.% Silizium. Die umhüllten Diamantpartikel werden einzeln gesintert.

### Beispiel 2:

Wie Beispiel 1, wobei nach der ersten Schicht die Zusammensetzung der Suspension geändert wird. Dabei wird eine zweite, mittlere Schicht aus NiCrBSi unter Zugabe von 10 Gew.% bis 30 Gew.% WC und/oder W₂C. Nach dem Abscheiden der zweiten Schicht wird wieder die ursprüngliche Suspension eingesprüht und es wird eine äusserste Schicht aus NiCrBSi abgeschieden.

### Beispiel 3:

Wie Beispiel 1, wobei durch gezielte Änderung der Zusammensetzung der eingesprühten Suspension eine zweite, mittlere Schicht aus NiCrBSi unter Zugabe von 30 Gew.% WC und/oder W₂C und eine äusserste Schicht aus NiCrBSi unter Zugabe von 10 Gew.% WC und/oder W₂C abgeschieden wird.

### Beispiel 4:

Diamantpartikel in einer engen Korngrössenverteilung aus dem Korngrössenbereich von etwa 50 µm bis etwa 500 µm werden in einem Wirbelbettprozess aus einer eingesprühten Suspension mit einer metallischen Umhüllung aus CuTi versehen. Die metallische Umhüllung basiert auf Kupfer mit einem Legierungsanteil von 4 Gew.% - 10Gew.% von Titan. Die umhüllten Diamantpartikel werden einzeln gesintert.

### Beispiel 5:

Wie Beispiel 4, wobei nach der Erzeugung der ersten Schicht mit der gewünschten Schichtdicke die Zusammensetzung der Suspension geändert wird und eine zweite, mittlere Schicht aus CuTi₅ mit 10 Gew.% bis 30 Gew.% WC und/oder W₂C abgeschieden wird.

### Beispiel 6:

Wie Beispiel 2, jedoch anstelle von WC bzw. W₂C Zugabe von TiC.

### Beispiel 7:

Wie Beispiel 2, jedoch anstelle von WC bzw. W₂C Zugabe von ZrO₂.

Weitere Varianten basieren auf Beispiel 2 oder Beispiel 6 und unterscheiden sich nur durch die Art der Hartstoffleilchen.

Die folgenden Beispiele beziehen sich auf Umhüllungen, die einen Hartstoffgradienten aufweisen, wie es anhand von Fig. 2 illustriert ist.

### Beispiel 8:

Diamantpartikel in einer engen Korngrössenverteilung aus dem Korngrössenbereich von etwa 50 µm bis etwa 500 µm werden in einem Wirbelbettprozess aus einer eingesprühten Suspension mit einer metallischen Umhüllung aus NiCrBSi beschichtet. Die nur eine Schicht umfassende metallische Umhüllung basiert auf Nickel unter Zugabe von 0,5 -15 Gew.% Chrom, 1 - 3 Gew.% Bor, und 1 - 5 Gew.% Silizium. Während der Beschichtung wird der eingesprühten Suspension von Beginn an zunehmend mehr Anteil an Hartstoffleilchen zugegeben. Die Konzentration der Hartstoffleilchen variiert von 0 Gew.% bis 30 Gew.%. Die umhüllten Diamantpartikel werden vereinzelt gesintert.

### Beispiel 9:

Wie Beispiel 4. Während der Beschichtung wird der eingesprühten Suspension zunehmend mehr Anteil an Hartstoffleilchen zugesetzt. Der Hartstoffanteil variiert von 0 Gew.% bis 30 Gew.%.

### Beispiel 10:

Wie Beispiel 4. Nach Erstellung der ersten Schicht wird der Suspension zunehmend von 0 Gew.% bis 30 Gew% Hartstoffanteil zugesetzt.

### Beispiel 11:

Wie Beispiel 10. Nach dem Erreichen der Hartstoffteilchenkonzentration von 30 Gew.% wird die Konzentration der Hartstoffleilchen in der Suspension wieder kontinuierlich verringert.

### Beispiel 12:

Wie Beispiel 8. Nach dem Erreichen der Hartstoffteilchenkonzentration von 30 Gew.% wird die Konzentration der Hartstoffleilchen in der Suspension wieder kontinuierlich verringert.

Die folgenden Beispiele geben metallische Umhüllungen an, bei denen die Konzentration eines oder mehrerer Legierungsbestandteile über den Radius der Umhüllung variiert, wie dies in den Fig. 3 - 5 angedeutet ist.

### Beispiel 13:

Diamantpartikel in einer engen Korngrössenverteilung aus dem Korngrössenbereich von etwa 50 µm bis etwa 500 µm werden in einem Wirbelbettprozess aus einer eingesprühten Suspension mit einer metallischen Umhüllung aus NiCrBSi beschichtet. Der Chromgehalt der Legierung in der eingesprühten Suspension wird von abnehmend von 5 Gew.% bis 15 Gew.% auf 0,5 Gew.% bis 10 Gew.% reduziert. Die umhüllten Diamantpartikel werden einzeln gesintert.

### Beispiel 14:

Wie Beispiel 13. Anstatt des Chroms wird der Siliziumanteil im angegebenen Umfang variiert.

### Beispiel 15:

Wie Beispiel 13. Anstelle des Chroms wird der Borgehalt im angegebenen Umfang reduziert.

### Beispiel 16:

Wie Beispiel 4. Während der Beschichtung wird der Titangehalt abnehmend von 4 Gew.% bis 10 Gew.% auf 0 Gew.% bis 5 Gew.% zurückgenommen.

### Beispiel 17:

Wie Beispiel 1. Während der Beschichtung wird die Si-Konzentration in der Legierung zunächst von wenigen Zehntelprozent bis 5 Gew.% gesteigert und dann wieder auf wenige Zehntelprozent zurückgenommen.

### Beispiel 18:

Wie Beispiel 1. Während der Beschichtung wird die B-Konzentration in der Legierung zunächst von wenigen Zehntelprozent bis 3 Gew.% gesteigert und dann wieder auf wenige Zehntelprozent zurückgenommen.

### Beispiel 19:

Wie Beispiel 4. Während der Beschichtung wird der Ti-Gehalt von 5 Gew.% kontinuierlich auf 10 Gew.% angehoben und danach wieder auf 5 Gew.% abgesenkt.

### Beispiel 20:

Wie Beispiel 1. Dabei wird während der Beschichtung die Cr-Konzentration der Legierung von 3 -15 Gew.% auf 0,5 - 5 Gew.% abgesenkt und danach wieder auf den ursprünglichen Wert angehoben.

### Beispiel 21:

Wie Beispiel 1. Der B-Gehalt der Legierung wird von 3 Gew.% auf 1 Gew.% verringert und danach wieder auf den ursprünglichen Wert angehoben.

### Beispiel 22:

Wie Beispiel 1. Der Si-Gehalt der Legierung wird von 5 Gew.% auf 2 Gew.% reduziert und danach wieder angehoben.

### Beispiel 23:

Wie Beispiel 4. Während der Beschichtung wird der Ti-Gehalt der Legierung von 10 Gew.% auf 5 Gew.% reduziert und danach wieder auf den ursprünglichen Wert angehoben.

Die folgenden Beispiele beziehen sich auf Verbundschneidkörper gemäss Fig. 8, die durch Aufbaugranulation in einem Wirbelbettprozess gemäss Fig. 7 aus umhüllten Diamantpartikeln hergestellt werden. Als Eingangsmaterial für den Wirbelbettprozess dienen umhüllte Diamantpartikel gemäss einem der Beispiele 1 bis 23. Es können auch Gemische aus umhüllten Diamantpartikeln gemäss einem der angeführten Beispiele eingesetzt werden. Die Aufbaugranulation erfolgt solange, bis Verbundschneidkörper mit einer mittleren Korngrösse von etwa 400 µm bis etwa 1400 µm erzeugt sind. Die Verbundschneidkörper werden in einem nachfolgenden Sinterschritt bei einer Temperatur von 900°C bis 1250°C, vorzugsweise 950°C bis 1080°C, verfestigt. Die Verbundschneidkörper können eine poröse Konsistenz aufweisen oder einen kompakten Aufbau mit etwa 90% bis etwa 99% der theoretisch erreichbaren Dichte besitzen.

### Beispiel 24:

Zur Aufbaugranulation wird in den Wirbelbettreaktor eine Suspension, enthaltend Metallpulver auf einer Nickel-, Eisen oder Kobalt Basis, vorzugsweise NiCrBSi Metallpulver, mit 1 - 3 Gew.% Bor, und 1 - 5 Gew.% Silizium und einem Cr-Anteil, der höher ist als der Ausgangsanteil an Cr für die Umhüllung der Diamantpartikel, eingesprüht. Vorzugsweise beträgt der Cr-Anteil im Metallpulver etwa 5 Gew.% bis etwa 15 Gew.%.

### Beispiel 25:

Zur Aufbaugranulation wird in den Wirbelbettreaktor eine Suspension, enthaltend Metallpulver auf einer Nickel-, Eisen oder Kobalt Basis, vorzugsweise NiCrBSi Metallpulver, mit 1 - 3 Gew.% Bor, und 1 - 5 Gew.% Silizium und einem Cr-Anteil, der niedriger ist als der Ausgangsanteil an Cr für die Umhüllung der Diamantpartikel, eingesprüht. Vorzugsweise beträgt der Cr - Anteil im Metallpulver etwa 0,5 Gew.% bis etwa 10 Gew.%.

### Beispiel 26:

Die Aufbaugranulation erfolgt unter Zugabe eines Binders enthaltend NiCrBSi Metallpulver mit 0,5 -15 Gew.% Chrom, 1 - 3 Gew.% Bor, und 1 - 5 Gew.% Silizium unter Zugabe von 10 Gew.% bis 30 Gew.% an Hartstoffen. Als Hartstoffe kommen bevorzugt WC, W₂C oder TiC in Frage.

### Beispiel 27:

Wie Beispiel 24 unter Zugabe von 10 Gew.% bis 30 Gew.% an Hartstoffen.Beispiel 28: Wie Beispiel 26 oder 27, wobei der Anteil an Hartstoffen in der in den Wirbelbettreaktor eingesprühten Suspension während der Aufbaugranulation kontinuierlich von 10 Gew.% auf bis zu 30 Gew.% gesteigert wird.

## Patentansprüche

1. Abrasiver Schneidkörper umfassend wenigstens eine Diamantpartikel, vorzugsweise wenigstens einen Diamanteinkristall, und metallisches Bindermaterial, **dadurch gekennzeichnet**, dass die Diamantpartikel (D) eine Korngrösse aufweist, die etwa 50 µm bis etwa 500 µm beträgt und jede Diamantpartikel (D) von einer in einem Wirbelbettprozess hergestellten Umhüllung (H) mit einer Wandstärke (t) von etwa 10 µm bis etwa 200 µm umgeben ist, wobei das Volumen der Umhüllung (H) mindestens 30% des Volumens der Diamantpartikel (D) im vollverdichteten Zustand, nach vereinzelter Sinterung der umhüllten Diamantpartikel (D, H) beträgt.

2. Abrasiver Schneidkörper nach Anspruch 1, dadurch gekennzeichnet, dass die Umhüllung (H) von der Oberfläche der Diamantpartikel (D) zur Aussenfläche des Schneidkörpers Bereiche (1, 2, 3; 1 - 4) mit unterschiedlichen Materialzusammensetzungen aufweist.

3. Abrasiver Schneidkörper nach Anspruch 2, dadurch gekennzeichnet, dass die Bereiche unterschiedlicher Materialzusammensetzung der Umhüllung durch unterschiedliche Konzentrationen (C) von Legierungsbestandteilen und/oder Hartstoffanteilen gebildet sind.

4. Abrasiver Schneidkörper nach Anspruch 3, dadurch gekennzeichnet, dass die Umhüllung (H) einen schichtartigen Aufbau (1, 2, 3) aufweist, mit einer innersten harten, chemischen Einbindungsschicht (1) für die Diamantpartikel, die vorzugsweise eine Legierung aus Nickel, Eisen und/oder Kobalt mit 0,5 -15 Gew.% Chrom, 1 - 3 Gew.% Bor, 1 - 5 Gew.% Silizium oder eine Legierung aus Kupfer-Titanat mit einem Titan-Anteil von 4 - 10 Gew.% umfasst, und wenigstens einer weiteren Schicht (2), die 10 - 30 Gew.% Hartstoffanteil, vorzugsweise Wolframcarbid, Titancarbid, Siliziumcarbid, Siliziumnitrid, Zirkonoxid, Aluminumoxid, Titanborid, Tantalcarbid, Oxide seltener Erden oder Mischungen derselben umfasst, wobei die Mengenangaben auf das Gewicht des Metallanteils der gesinterten umhüllten Diamantpartikel bezogen sind.

5. Abrasiver Schneidkörper nach Anspruch 2, dadurch gekennzeichnet, dass die Bereiche (1 - 4) unterschiedlicher Materialzusammensetzungen der Umhüllung (H) durch unterschiedliche Konzentrationen (C) von Legierungsbestandteilen und/oder Hartstoffanteilen gebildet sind, die stetig ineinander übergehen.

6. Abrasiver Schneidkörper nach Anspruch 5, dadurch gekennzeichnet, dass die Konzentration (C) der Legierungsbestandteile und/oder der Hartstoffanteile von der Oberfläche der Diamantpartikel (D) zur Aussenfläche des Schneidkörpers einen Gradienten aufweist, wobei vorzugsweise die äusseren Bereiche der Umhüllung die höchsten Konzentrationen (C) aufweisen.

7. Abrasiver Schneidkörper nach Anspruch 3 oder 5, dadurch gekennzeichnet, dass ein zwischen dem an die Diamantpartikel (D) angrenzenden Bereich (1) und den am weitesten davon beabstandeten Bereichen angeordneter Bereich (3; 4) der Umhüllung die niedrigsten Konzentrationen (C) an Legierungsbestandteilen und/oder Hartstoffanteilen besitzt.

8. Abrasiver Schneidkörper nach einem der Ansprüche 3 bis 7, dadurch gekennzeichnet, dass die Legierungsbestandteile Chrom, Bor, Titan, Silizium oder keramische Zuschlagstoffe mit niedriger Wärmeleitfähigkeit, wie beispielsweise Oxide seltener Erden, und die Hartstoffe Wolframcarbid, Titancarbid, Siliziumcarbid, Siliziumnitrid, Zirkonoxid, Aluminumoxid, Titanborid, Tantalcarbid, oder Mischungen derselben umfassen.

9. Abrasiver Schneidkörper nach Anspruch 8, dadurch gekennzeichnet, dass der Konzentrationsunterschied der Hartstoffteilchen in den verschiedenen Bereichen bis etwa 30 Gew.% beträgt und/oder der Konzentrationsunterschied der Legierungsbestandteile in den verschiedenen Bereichen bis zu etwa 10 Gew.% beträgt.

10. Verbundschneidkörper umfassend eine Anzahl von abrasiven Schneidkörpern gemäss einem der Ansprüche 1 - 9, die durch Aufbaugranulation und anschliessendes Sintern miteinander verbunden sind, und der eine mittlere Korngrösse von etwa 400 µm bis etwa 1400 µm aufweist.

11. Schneidsegment für Hohlbohrkronen, Wandsägeblätter oder Trennscheiben, umfassend eine Anzahl von abrasiven Schneidkörpern gemäss einem der Ansprüche 1 - 9, die, gegebenenfalls unter Zugabe von weiterem metallischem Binder, in die gewünschte Form gebracht und durch Sintern oder Heisspressen miteinander verbunden sind.

12. Verfahren zur Herstellung von abrasiven Schneidkörpern, die wenigstens eine Diamantpartikel und metallisches Bindermaterial umfassen, dadurch gekennzeichnet, dass Diamantpartikel (D) einer Korngrösse von etwa 50 µm bis etwa 500 µm in einen Wirbelbettreaktor eingebracht und mit einer metallischen Umhüllung (H) versehen werden, deren Wandstärke (t) etwa 10 µm bis etwa 200 µm beträgt und die ein Volumen aufweist, das mindestens 30% des Volumens der Diamantpartikel (D) im vollverdichteten Zustand beträgt, nachdem die umhüllten Diamantpartikel (D, H) einzeln gesintert worden sind.

13. Verfahren nach Anspruch 12, dadurch gekennzeichnet, dass die metallische Umhüllung (H) aus einer Suspension abgeschieden wird, die aus einem Lösungsmittel, vorzugsweise Wasser, dem aufzubringenden, pulverförmigen Metall, weniger als 10 Gew.%, bezogen auf das Gewicht des Metallpulvers und allfälliger Zusatzstoffe, beispielsweise Hartstoffteilchen, an einem organischen Binder, vorzugsweise Polyethylenglykol, und Additiven zur Einstellung der Rheologie besteht und durch eine Düse auf die im Wirbelbettreaktor durch ein vorgewärmtes Fluidisiergas, vorzugsweise Luft, in Schwebe gehaltenen und verwirbelten Diamantpartikel gesprüht wird.

14. Verfahren nach Anspruch 13, dadurch gekennzeichnet, dass das pulverförmige Metall in der Suspension eine mittlere Korngrösse aufweist, die etwa 0,5 µm bis etwa 100 µm beträgt, wobei die maximale Korngrösse vorzugsweise die Hälfte der Korngrösse der Diamantpartikel beträgt.

15. Verfahren nach Anspruch 14, dadurch gekennzeichnet, dass das Metallpulver aus einer Legierung auf Nickel-, Eisen- und/oder Kobaltbasis unter Zugabe von Silizium und/oder Bor und grenzflächenaktiven Elementen, wie beispielsweise Chrom, oder aus einer Kupfer-Titanat Legierung besteht.

16. Verfahren nach einem der Ansprüche 13 bis 15, dadurch gekennzeichnet, dass die Zusammensetzung der in den Wirbelbettreaktor eingesprühten Suspension während des Beschichtungsvorgangs verändert wird.

17. Verfahren nach Anspruch 16, dadurch gekennzeichnet, dass die Suspension Legierungsbestandteile, keramische Zuschlagsstoffe und/oder Hartstoffteilchen enthält, deren Konzentration während des Beschichtungsvorgangs verändert wird.

18. Verfahren nach einem der Ansprüche 12 - 17, dadurch gekennzeichnet, dass die umhüllten Diamantpartikel (D, H) einer Aufbaugranulation unterzogen werden, wobei Granulate erzeugt werden, die durch Sintern zu einem Verbundschneidkörper mit einer Korngrösse von etwa 400 µm bis etwa 1400 µm verarbeitet werden.

19. Verfahren nach Anspruch 18, dadurch gekennzeichnet, dass die Aufbaugranulation durch Maskengranulation, Siebgranulation oder durch Anlagerung von mehreren umhüllten Diamantpartikeln in einem Wirbelbettprozess erfolgt.

20. Verfahren nach einem der Ansprüche 12 - 17, dadurch gekennzeichnet, dass die umhüllten Diamantpartikel (D, H) durch Verpressen bei Normaltemperatur zu einem Pressling und anschliessendes Sintern des Presslings oder durch einen Heisspressvorgang zu Schneidsegmenten, Bohrköpfen oder Bohrplättchen gefertigt werden.
